# EUROPÄISCHE PATENTSCHRIFT

(11) **EP 1 053 923 B1**
(45) Veröffentlichungstag und Bekanntmachung des Hinweises auf die Patenterteilung: **10.12.2003**
(21) Anmeldenummer: 00110427.2
(22) Anmeldetag: 16.05.2000
(51) Int. Cl.: B60T 10/02, B60T 1/087

(54) **Hydrodynamischer Retarder und Vorrichtung zur elektronischen Steuerung eines hydrodynamischen Retarders**
Hydrodynamic retarder and device for electronic control of a hydrodynamic retarder
Ralentisseur hydrodynamique et dispositif de commande électronique d'un ralentisseur hydrodynamique

(30) Priorität: 19.05.1999 DE 19923022
(43) Veröffentlichungstag der Anmeldung: 22.11.2000
(73) Patentinhaber: Voith Turbo GmbH & Co. KG, 89522 Heidenheim (DE)
(72) Erfinder: Dietzel, Bernd, 89428 Syrgenstein (DE); Nitsche, Martin, 89547 Gerstetten (DE)
(74) Vertreter: Koch, Annegret Christa

(56) Entgegenhaltungen:
- EP-A- 0 953 489
- WO-A-94/27845
- DE-A- 4 341 213
- DE-A- 4 439 368

## Beschreibung

Die Erfindung betrifft einen hydrodynamischen Retarder, im einzelnen mit den Merkmalen aus dem Oberbegriff des Anspruchs 1. Ferner eine Vorrichtung zur elektronischen Steuerung eines hydrodynamischen Retarders, insbesondere Retardersteuervorrichtung.

Die Ansteuerung und Bedienung eines Retarders erfolgte bisher meist mit einer eigens hierfür geschaffenen Retardersteuerung, wie sie beispielsweise aus der DE 43 41 213 oder der EP 0 291 887 bekannt geworden ist. Derartige Retardersteuerungen sind in der Regel im Führerraum eines Fahrzeuges in der Nähe des Bedienelementes für den Retarder, wie beispielsweise im Falle der DE 43 41 213 beschrieben, untergebracht. Zur Verbindung mit den einzelnen Senoren und Aktoren sind entsprechend lange Leitungen und eine Vielzahl von Steckverbindungen erforderlich.

Neben derartigen Steuerungen sind auch Retardersteuerungen bekannt geworden, die in das Fahrzeugmanagementsystem integrierbar sind, wie beispielsweise in der WO 94/27845 beschrieben.

Ein Nachteil der bekannten Retardersteuereinrichtungen besteht darin, daß für einen Retarder gleichen Typs die Steuerungen stets identisch eingestellt sind, um beispielsweise leichte Tauschbarkeit zu gewährleisten, d.h. jedoch, daß die bekannten hydrodynamischen Toleranzen nicht ausgeschlossen werden können. Derartige Retardersteuereinrichtungen sind somit nicht auf den individuell im Fahrzeug eingebauten Retarder abgeglichen.

Werden andererseits die Retardersteuereinrichtungen auf einen Retarder bestimmten Typs abgeglichen, so mußte beim Austausch des Retarders die Steuerung, beispielsweise die Elektronische Steuereinheit (ECU), entsprechend umprogrammiert werden. Dies ist jedoch sehr arbeitsintensiv.

Der Erfindung lag daher die Aufgabe zugrunde, einen hydrodynamischen Retarder beziehungsweise eine elektronische Vorrichtung zur Retardersteuerung anzugeben, die die zuvor aufgezeigten Nachteile vermeidet, das heißt, einen einfachen Austausch des Retarders ermöglicht und bei der die Retardersteuerung auf den einzelnen, im Fahrzeug eingebauten Retarder abgestimmt ist. Desweiteren sind die erforderlichen Leitungsverbindungen, deren Länge und die erforderlichen Steckverbindungen zu reduzieren.

Die erfindungsgemäße Lösung der Aufgabe ist durch die Merkmale der Ansprüche 1 und 17 charakterisiert. Vorteilhafte Ausgestaltungen sind jeweils in den Unteransprüchen wiedergegeben.

Erfindungsgemäß wird bei einem hydrodynamischen Retarder, umfassend ein Retardergehäuse und eine, diesem zugeordnete Steuervorrichtung, insbesondere Retardersteuervorrichtung, umfassend wenigstens eine Steuereinrichtung, insbesondere Retardersteuereinrichtung, die Steuereinrichtung im Retardergehäuse angeordnet. Unter Steuereinrichtung soll dabei das Steuergerät verstanden werden, welchem die zur Ansteuerung des hydrodynamischen Retarders erforderlichen Größen zugeführt und verarbeitet werden, und die aus den Eingangsgrößen entsprechend des gewünschten Ansteuervorganges zu bildenden Stellgrößen ausgegeben werden. Dieses umfaßt in der Regel eine Mehrzahl elektrischer Bauelemente, welche entsprechend der vorzunehmenden Verarbeitung der Eingangsgrößen einander zugeordnet und miteinander gekoppelt sind. Vorzugsweise sind eine Mehrzahl der elektronischen Bauelemente auf wenigstens einer Trägerplatte angeordnet und von einem Steuereinrichtungsgehäuse umschlossen. Dabei besteht die Möglichkeit, daß die Trägerplatte vollständig im

Steuereinrichtungsgehäuse integriert ist oder aber wenigstens einen Teilwandbereich des Steuereinrichtungsgehäuses bildet.

Die erfindungsgemäße Lösung bietet den Vorteil einer erhöhten Zuverlässigkeit, da die erforderliche Anzahl und Länge der zur elektrischen Kopplung erforderlichen Leitungsverbindungen gegenüber den konventionellen Lösungen erheblich geringer ist. Des weiteren wird durch die Anordnung der Steuervorrichtung in dem hydrodynamischen Retarder eine individuelle Abstimmung der Steuervorrichtung auf den jeweiligen hydrodynamischen Retarder möglich, ohne daß bei einem Austausch des hydrodynamischen Retarders eine Umprogrammierung der Steuereinrichtung vorgenommen werden muss. Die eindeutige Zuordnung von hydrodynamischem Retarder und elektronischer Steuervorrichtung ermöglicht eine Vereinfachung der Logistik. Die bauliche Einheit von Steuervorrichtung und hydrodynamischem Retarder ermöglicht die Schaffung einer prüfbaren Einheit von Steuervorrichtung, Steuerhydraulik, Aktuatorik und Sensorik des hydrodynamischen Retarders, wobei die Steuervorrichtung bereits an die während eines Prüfvorganges feststellbaren Toleranzen anpassbar ist.

Unter einem weiteren Aspekt der Erfindung ist der Steuervorrichtung ein Gehäuse zugeordnet, welches vorzugsweise gegen Hydraulikflüssigkeit, beispielsweise Öl und/oder einer anderen Flüssigkeit dicht ausgeführt ist. Die Steuereinrichtung kann dann im Ölsumpf des hydrodynamischen Retarders angeordnet werden. Dadurch besteht die Möglichkeit, die elektronischen Bauelemente der Steuereinrichtung einer wenigstens indirekten Kühlung durch das im Betriebsmittel- bzw. Ölsumpf des hydrodynamischen Retarders befindliche Betriebsmittel. Die öldichte Ausführung des Gehäuses bedingt jedoch zur Realisierung der elektrischen Verbindung zwischen der Steuereinrichtung und den, zur Erfassung der, den aktuellen Füllungszustand wenigstens mittelbar charakterisierenden Größen und/oder des Fahrerwunsches nach Erzeugung eines bestimmten Bremsmomentes und/oder weiterer Randbedingungen erforderlichen Sensoren der Steuervorrichtung und den mittels der Steuervorrichtung anzusteuernden Aktuatoren zur Betätigung der einzelnen Stelleinrichtungen des hydrodynamischen Retarders, beispielsweise einer Druckerzeugungseinrichtung zur Einstellung eines bestimmten, auf den Spiegel eines Betriebsmittelsumpfes in einem Betriebsmitteltank wirkenden Druckes und/oder zur Vorgabe von Eingangsgrößen durch eine übergeordnete Steuer- beziehungsweise Regelvorrichtung, eine entsprechend gestaltete Durchführung am Gehäuse. Vorzugsweise werden dabei die einzelnen Kontaktelemente beziehungsweise Leitungen in einem elektrisch nicht leitfähigen und flüssigkeitsdichtem Material eingebettet durch das Steuereinrichtungsgehäuse geführt, so daß das Eindringen von schädlichen Stoffen, wie beispielsweise Öl, in das Steuereinrichtungsgehäuse verhindert wird.

Die Anordnung der Steuereinrichtung im in Einbaulage unteren Bereich des Retarders und das Vorsehen eines entsprechenden Gehäuses ermöglicht es, die Sensoren zur Erfassung wenigstens einer, den aktuellen Funktionszustand des hydrodynamischen Retarders zu einem bestimmten Zeitpunkt wenigstens mittelbar beschreibenden Größen ebenfalls im Bereich unterhalb der Retardersymmetrielinie, welche der Rotationsachse entspricht, anzuordnen und somit die gesamte Steuervorrichtung relativ kompakt auszuführen. Die beschriebene Anordnung im Ölsumpf, welcher in der Regel in einer Ölwanne angesammelt wird, die vom Unterteil des Retardergehäuses gebildet wird, erlaubt es desweiteren, die Steuervorrichtung komplett mit der dazugehörigen Steuerhydraulik, den Stelleinrichtungen und den Sensoren, welche in der Regel am Gehäuse der Ölwanne angeordnet sind, auf einfache Art und Weise zu demontieren und separat als Gesamteinheit zu prüfen.

Zur Sicherstellung der Verbindung zwischen den mit der Steuereinrichtung gekoppelten Elementen, wie Sensoren, Aktuatoren und/oder einer weiteren Steuervorrichtung erfolgt die Verbindung zwischen den einzelnen Kontakten und der Steuereinrichtung, insbesondere den auf der Trägerplatte angeordneten elektrischen Bauelementen derart, daß diese als Federkontakte ausgeführt sind, so daß die Federn die Kontakte auf die Kontaktstellen der Elektronikplatine pressen. Alternativ können gesteckte und/oder gelötete und/oder geschweißte Verbindungen zum Einsatz gelangen.

Die elektrischen Verbindungen zwischen den Sensoren, Aktuatoren und der Steuereinrichtung des hydrodynamischen Retarders können in Form von
a) flexiblen Kabelverbindungen und/oder
b) starren Leiterbahnen, beispielsweise aus Kupfer,
ausgeführt werden. In der Regel werden dabei flexible Kabelverbindungen bevorzugt angewandt, da diese hinsichtlich der Leitungsführung einfach anpassbar sind.

Um eine thermische Überlastung der Steuervorrichtung aufgrund der Wärmeentwicklung in dem hydrodynamischen Retarder zu verhindern, ist mit Vorteil vorgesehen, daß die elektronische Steuereinrichtung, welche im Gehäuse des hydrodynamischen Retarders integriert ist, wärmetechnisch von diesem entkoppelt wird, beispielsweise durch eine wärmeisolierende Zwischenschicht. Das Gehäuse der elektronischen Steuereinrichtung ist dabei beispielsweise bei Anordnung im Ölsumpf des hydrodynamischen Retarders zum Ölsumpf hin mit einem wärmedämmenden Medium gegen zu großen Wärmeübergang vom heißen Öl auf die elektronischen Bauelemente geschützt. Diesbezüglich besteht die Möglichkeit, entweder das Gehäuse mit einer Beschichtung aus einem wärmedämmenden Medium zu versehen oder aber Teile der Gehäusewandung aus einem wärmedämmenden Material zu fertigen.

Besonders vorteilhaft ist es des weiteren, die elektronische Steuereinrichtung nicht nur wärmetechnisch vom hydrodynamischen Retarder zu entkoppeln sondern auch schwingungstechnisch, beispielsweise dadurch, daß die elektronische Steuereinrichtung schwingungsgedämpft in dem hydrodynamischen Retarder aufgehängt ist.

In einer weiteren fortgebildeten Ausführungsform sind der Steuereinrichtung Mittel zur wenigstens indirekten Abfuhr von Wärme von den elektrischen Bauelementen der Steuereinrichtung zugeordnet. Diese Mittel fungieren nach dem Prinzip der Wärmeleitung oder des Wärmeüberganges. Im erstgenannten Fall sind beispielsweise die, die elektronischen Bauelemente tragenden Trägerplatten gut wärmeleitend mit dem Boden des Gehäuses der Steuervorrichtung verbunden. Vorzugsweise wird dazu eine Verbindung gewählt, welche Wärmeleitung ermöglicht Dies kann beispielsweise mittels einer Klebverbindung realisiert werden. Eine andere Möglichkeit der Wärmeabfuhr durch wenigstens indirekte Kühlung besteht darin, kühlmittelführende Kanäle vorzusehen, welche aufgrund des Wärmeüberganges von den elektronischen Bauelementen auf das Kühlmittel die Wärme an den elektronischen Bauelementen abführen. Bei den Kühlkanälen kann es sich dabei um separate Kanäle in Form von rohrförmigen Elementen oder Leitungen handeln. Vorzugsweise sind die Kühlkanäle jedoch direkt in die Wandung des Gehäuses der Steuereinrichtung eingearbeitet. Dabei besteht die Möglichkeit, daß beispielsweise der Boden, und/oder die Seitenwände und/oder die Oberseite des Gehäuses in Einbaulage in dem hydrodynamischen Retarder betrachtet den Deckel eines Kühlwasserkanals beziehungsweise eines Kühlwasservorlaufes bilden. Bezüglich der Anordnung der Kühlmittelkanäle beziehungsweise Kühlmittelleitungen bestehen eine Vielzahl von Möglichkeiten. Diese können beispielsweise Bestandteil
a) eines der Steuervorrichtung des hydrodynamischen Retarders zugeordneten autarken Kühlkreislaufes
b) eines, dem hydrodynamischen Retarder zugeordneten Kühlkreislaufes
c) eines, einem anderen Element im Fahrzeug zugeordneten Kühl kreislaufes
d) des Fahrzeugkühlkreislaufes
sein. Denkbar ist auch die Kopplung des Kühlkreislaufes der Steuereinrichtung des hydrodynamischen Retarders mit anderen Kühlkreisläufen im Fahrzeug. Zur Verringerung der Bauteilanzahl und der Länge der bereitzustellenden Leitungen zum Zwecke der Kühlung von einzelnen Aggregaten sind die Kühlmittelkanäle beziehungsweise Kühlmittelleitungen der Steuereinrichtung des hydrodynamischen Retarders vorzugsweise in einem ehedem vorzusehenden Kühlmittelkreislauf integriert.

Die elektronische Steuereinrichtung umfaßt wenigstens einen Eingang, welcher mit den, zur wenigstens mittelbaren Erfassung eines Ist-Wertes einer Größe für einen aktuellen Fahrerwunsch und/oder eines Fahrzustandes vorgesehenen Sensoren und/oder einer weiteren Steuervorrichtung koppelbar ist. Des weiteren ist wenigstens ein Ausgang vorgesehen, welcher mit den Aktuatoren zur Änderung des Betriebszustandes des hydrodynamischen Retarders, beispielsweise der Stelleinrichtung zur Änderung des Druckes auf den Betriebsmittelsumpf, koppelbar ist. Bei Anordnung des Gehäuses der Steuereinrichtung im Ölsumpf des hydrodynamischen Retarders und der öldichten Ausführung des Gehäuses der Steuereinrichtung sind entsprechende Vorrichtungen zur Durchführung von elektrischen Leitungsverbindungen bzw. Kabeln vorzusehen. Die Vorrichtung zur Kabeldurchführung zur Realisierung eines Überganges von Kabeln von einem mit einem Schmier- oder Betriebsmittel oder ähnlichem wenigstens teilweise befüllten oder Rückstände enthaltenden und durch ein Gehäuse wenigstens teilweise umschlossenen Raumbereich nach außerhalb des Raumbereiches umfaßt einen aus elektrisch nicht leitfähigem Material bestehenden Isolierkörper zur Durchführung der Kabelelemente, welcher aus einem elektrisch nicht leitfähigem und gegenüber Flüssigkeiten undurchlässigen Material besteht. Die Verbindung zwischen den elektrischen Kontakten der Verbindungsleitungen beziehungsweise Verbindungskabel und den elektronischen Bauelementen der Steuervorrichtung erfolgt vorzugsweise derart, daß diese als Federkontakte ausgeführt sind, um auch unter Störungen einen sicheren Kontakt der Verbindungen zwischen den einzelnen Verbindungsleitungen und den elektrischen Bauelementen der Steuereinrichtung zu realisieren.

Eine andere Ausführung besteht darin, starre Leiterbahnen, z.B. aus Kupfer zu verwenden, welche die Verbindung zwischen den Sensoren und Aktuatoren und den elektrischen Elementen der Steuereinrichtung sowie der Durchführung des Gehäuses der Steuereinrichtung herstellen. Zur Koppelung der Retardersteuervorrichtung mit einer weiteren zweiten Steuervorrichtung wird eine Leitungsverbindung zwischen dem Gehäuse der Steuereinrichtung der Retarderbaueinheit und dem Gehäuse des hydrodynamischen Retarders vorgesehen, wobei der Anschluss an die zweite Steuervorrichtung im Bereich des Retardergehäuses angeordnet ist und vorzugsweise in Form einer, möglicherweise einfachen Steckverbindung ausgeführt wird.

Unter einem weiteren Aspekt ist gegen das Eindringen von Öldämpfen, Feuchtigkeit und anderen schädlichen Medien in die Steuereinrichtung die Entlüftung der Steuereinrichtung mit einem speziellen Deckel im Gehäuse der Steuereinrichtung vorgesehen. Zur Vermeidung des Eindringens von Feuchtigkeit besteht desweiteren die Möglichkeit, die Innenwandung des Gehäuses der Steuereinrichtung des hydrodynamischen Retarders zusätzlich mit einer Membran zu versehen, welche beispielsweise aus Goretex besteht.

Besonders vorteilhaft ist es, wenn die Steuereinrichtung des hydrodynamischen Retarders mit der Steuervorrichtung des Fahrzeuges gekoppelt ist. In diesem Fall besteht die Möglichkeit, eine Vorrichtung zur elektronischen Steuerung eines hydrodynamischen Retarders derart zu schaffen, daß diese neben der elektronischen Steuereinrichtung für den hydrodynamischen Retarder eine weitere elektronische Steuereinrichtung für das Fahrzeugmanagement, welche in einer vorbestimmten Position im Fahrzeug entfernt von dem hydrodynamischen Retarder angeordnet ist, aufweist, wobei die elektronische Steuereinrichtung des hydrodynamischen Retarders direkt im Gehäuse des hydrodynamischen Retarders angeordnet ist und über zumindest eine Signalleitung elektrisch mit der elektronischen Steuereinrichtung beziehungsweise einer Schnittstelle für das Fahrzeugmanagement verbindbar ist.

Zusätzlich besteht die Möglichkeit, bei Vorsehen einer Getriebebaueinheit im Antriebsstrang die Steuereinrichtungen von Getriebebaueinheit und Retarder miteinander zu koppeln oder die Steuereinrichtung des Retarders in die Steuereinrichtung der Getriebebaueinheit zu integrieren oder umgekehrt. In beiden Fällen besteht wiederum die Möglichkeit der Kopplung der einzelnen Steuereinrichtungen mit der Steuereinrichtung für das Fahrzeugmanagement beziehungsweise der Integration dieser Steuereinrichtungen in die Steuereinrichtung für das Fahrzeugemanagement.

Die Erfindung wird nachfolgend anhand von Figuren beispielhaft beschrieben. Es zeigen:
- Figur 1: einen hydrodynamischen Retarder mit einer erfindungsgemäß angeordneten Steuereinrichtung, insbesondere Retardersteuereinrichtung im Getriebegehäuse;
- Figur 2a-2c: eine bevorzugte Anordnung der elektronischen Steuereinrichtung, insbesondere Retardersteuereinrichtung im Ölsumpf des hydrodynamischen Retarders;
- Figur 3: eine erfindungsgemäße Vorrichtung zur elektronischen Steuerung eines hydrodynamischen Retarders mit einer ersten elektronischen Steuereinrichtung für das Fahrzeugmanagement und einer zweiten elektronischen Steuereinrichtung für den hydrodynamischen Retarder.

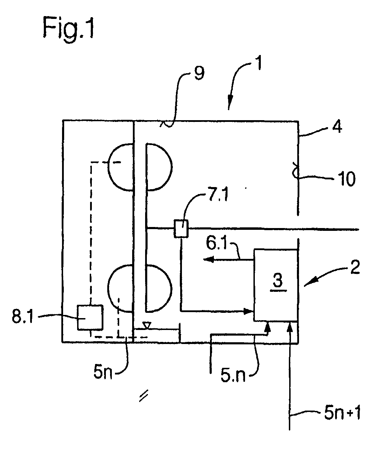

Die Figur 1 verdeutlicht in schematisch vereinfachter Darstellung einen hydrodynamischen Retarder 1, welchem zur Realisierung unterschiedlicher Betriebsweisen, insbesondere der Füllung und Entleerung eine Steuervorrichtung 2 zugeordnet ist Die Steuervorrichtung 2 umfaßt eine Steuereinrichtung 3, welche in der Regel auch als Steuergerät bezeichnet wird. Die Steuereinrichtung 3 ist erfindungsgemäß im Gehäuse 4 des hydrodynamischen Retarders 1 integriert. Die Steuereinrichtung 3 weist wenigstens einen Eingang 5.1 und einen Ausgang 6.1 auf. Vorzugsweise sind eine Mehrzahl von Eingängen 5.1 bis 5.n vorgesehen, welche mit Sensoren 7.1 bis 7.n bei Integration des hydrodynamischen Retarders 1 in einem Fahrzeug zur wenigstens mittelbaren Erfassung einer, den aktuellen Füllungsgrad und/oder einer, den aktuellen Fahrerwunsch nach Erzeugung eines bestimmten Bremsmomentes wenigstens mittelbar charakterisierenden Größe koppelbar sind. Des weiteren besteht die hier nicht dargestellte Möglichkeit, einen Eingang 5.n+1 vorzusehen, welcher mit einer übergeordneten Steuervorrichtung koppelbar ist. Die Steuereinrichtung 3 verarbeitet die an den Eingängen 5.1 bis 5.n anliegenden Signale und bildet dementsprechend die Stellsignale zur Ansteuerung der Stellelemente zur Änderung der Betriebsweise des hydrodynamischen Retarders. Im dargestellten Fall ist beispielhaft als Stellelement der Aktuator 8.1 dargestellt, welcher beispielsweise wenigstens mittelbar auf den Spiegel des Ölsumpfes einwirkt. Bei den in der Figur 1 dargestellten Sensoren und Aktuatoren handelt es sich lediglich um Beispiele.

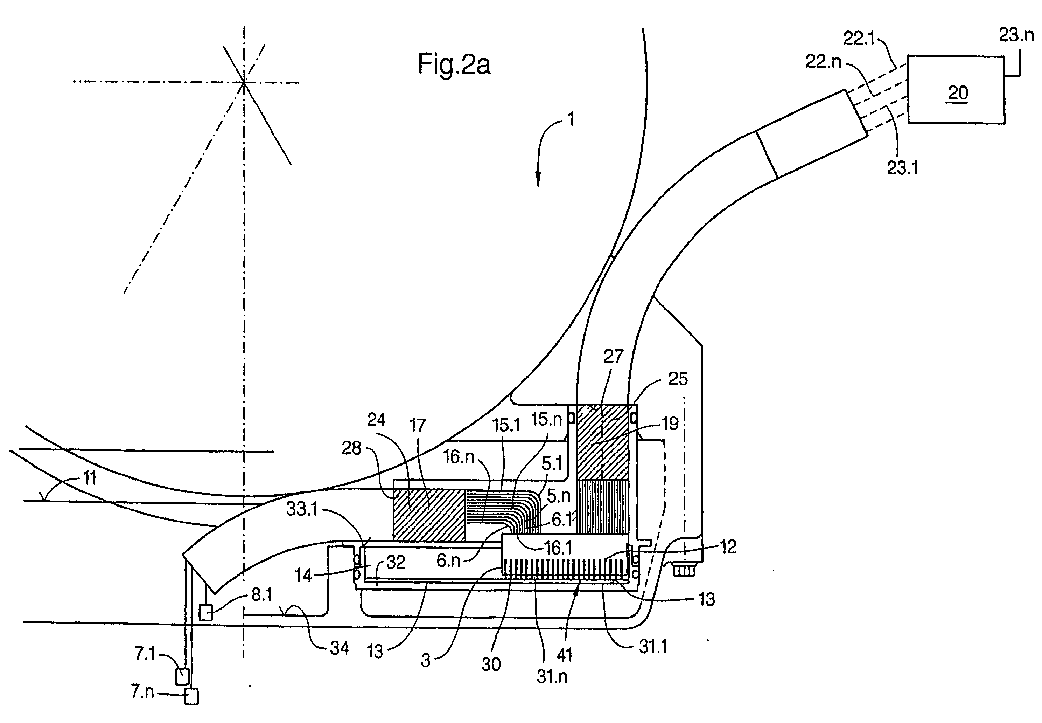

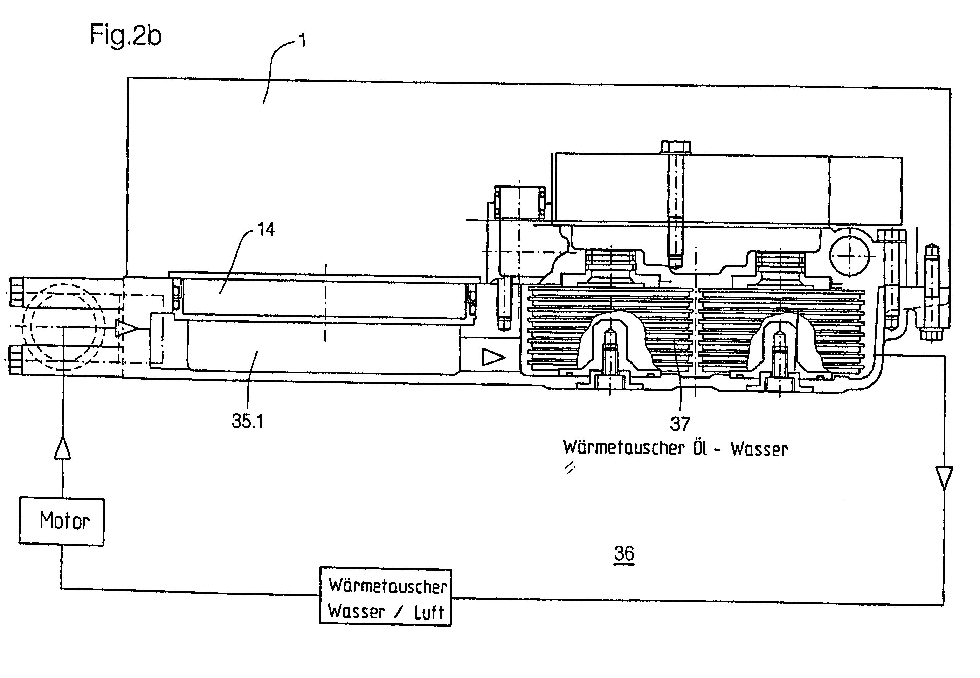

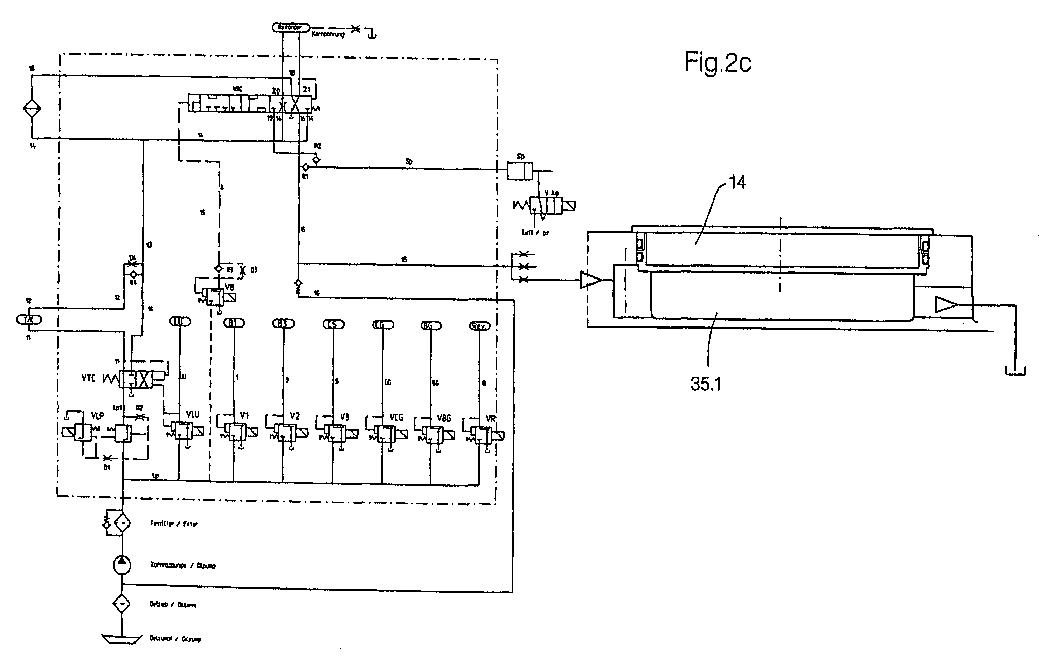

Bei der in der Figur 1 dargestellten Anordnung der Steuereinrichtung 3 an die Gehäuseinnenwandung 9 in Einbaulage des hydrodynamischen Retarders 1 betrachtet an einer Seitenwand 10 handelt es sich ebenfalls um ein Beispiel. Andere Anordnungsmöglichkeiten sind denkbar. Vorzugsweise wird jedoch eine Anordnung wie in der Figur 2 dargestellt, gewählt. Der grundlegende Aufbau entspricht im wesentlichen dem in der Figur 1 beschriebenen, weshalb für gleiche Elemente die gleichen Bezugszeichen verwendet werden. Die Anordnung der Steuereinrichtung 3 erfolgt jedoch in Einbaulage des hydrodynamischen Retarders betrachtet im unteren Bereich, vorzugsweise im Ölsumpf des hydrodynamischen Retarders 1. Die Steuereinrichtung 3 umfaßt eine Vielzahl von elektrischen Bauelementen 12, welche auf wenigstens einer Trägerplatte 30 angeordnet sind und die in einem separaten Gehäuse 14 integriert sind. Das Gehäuse 14 der Steuereinrichtung 3 ist dabei flüssigkeitsdicht ausgeführt. Zur Realisierung der Verbindung zwischen den Eingängen 5.1 bis 5.n der Steuereinrichtung und den Sensoren 7.1 bis 7.n beziehungsweise einer übergeordneten Fahrsteuerung und den Ausgängen 6.1 bis 6.n mit den Aktuatoren 8.1 bis 8.n sind entsprechende Leitungsverbindungen 15.1 bis 15.n für die Kopplung zwischen Sensoren 7.1 bis 7.n und den Eingängen 5.1 bis 5.n und 16.1 bis 16.n für die Kopplung zwischen den Ausgängen 6.1 und 6.n und den Aktuatoren 8.1 und 8.n vorgesehen. Diese Leitungen können als flexible Kabelverbindungen oder aber als starre Leitungen, beispielsweise in Form von Kupferleitungen ausgeführt werden. Zur Realisierung der flüssigkeitsdichten Ausgestaltung des Gehäuses 14 sind entsprechende Durchführungen 17 und 18 am Gehäuse 14 vorgesehen. Die Durchführung 17 dient dabei der Führung der Leitungsverbindungen zwischen den Sensoren 7.1 bis 7.n und den Eingängen 5.1 bis 5.n der Steuereinrichtung 3 der Realisierung des Überganges der Leitungen 16.1 bis 16.n zur Verbindung zwischen den Ausgängen 6.1 bis 6.n mit den Aktuatoren 8.1 bis 8.n. Zusätzlich ist eine weitere Durchführung 18 vorgesehen, welche eine öldichte Durchführung der Leitungsverbindung zwischen einer übergeordneten Steuervorrichtung, vorzugsweise der Steuervorrichtung 20 zur Realisierung des Fahrzeugmanagements mit der elektronischen Steuereinrichtung 3 ermöglicht. Diese Steuervorrichtung 20 umfaßt ebenfalls eine Steuereinrichtung 21 mit wenigstens einem Eingang 22.1 bis 22.n und einem Ausgang 23.1 bis 23.n, wobei wenigstens ein Ausgang 23.n mit der Steuereinrichtung 3 des hydrodynamischen Retarders 1 koppelbar ist. Die Dichtheit gegenüber Flüssigkeiten der Durchführung kann dabei auf unterschiedliche Art und Weise realisiert werden. Vorzugsweise werden die einzelnen Leitungen 15.1 bis 15.n beziehungsweise 16.1 bis 16.n in einem elektrisch nicht leitfähigen Material, welches gleichzeitig flüssigkeitsdicht ist, eingebettet, wobei dieses Material einen Isolierkörper 24 beziehungsweise 25 bildet, der die Zwischenräume zwischen den einzelnen Leitungen und den für die Durchführungen 17 bis 18 erforderlichen Durchgangsöffnungen 27 bis 28 ausfüllt und abdichtet Die Steckverbindung zwischen den Verbindungsleitungen zwischen Sensoren 7.1 bis 7.n und der elektronischen Steuereinrichtung 3 beziehungsweise den Aktuatoren 8.1 bis 8.n und der elektronischen Steuereinrichtung 3 sowie der übergeordneten Steuervorrichtung 20 und der Steuereinrichtung 3 kann dabei, wie in der Figur 2 dargestellt, im Gehäuse 14 realisiert werden. Die Steuereinrichtung 3 umfaßt dazu eine Trägerplatte 30, auf welcher eine Vielzahl elektronischer Bauelemente angeordnet sind. Die Trägerplatte bildet dabei beispielsweise eine mit elektrischen Steckkontakten 31.1 bis 31.n versehene Platine. Andere Kontaktierungsarten sind ebenfalls denkbar. Die einzelnen Leitungen 15.1 bis 15.n beziehungsweise 16.1 bis 16.n werden dabei im abisolierten Zustand mit den elektrischen Kontakten 31.1 bis 31.n in Wirkverbindung gebracht. Es besteht jedoch auch die hier nicht dargestellte Möglichkeit, die elektrische Verbindung bereits im Bereich der Durchführungen 17 bis 19 vorzusehen, wobei die Verbindung ebenfalls in einem Isolierkörper eingebettet ist.

Bei der in der Figur 2a dargestellten Möglichkeit sind Durchführungen 17 bis 18 zur jeweils gemeinsamen Führung der Leitungselemente zur Kopplung mit den Eingängen und den Ausgängen vorgesehen. Es besteht jedoch auch die Möglichkeit, die einzelnen Leitungsverbindungen über eine Mehrzahl von Durchführungen mit der elektronischen Steuereinrichtung 3 in Verbindung zu bringen, wobei jedoch in diesem Fall der konstruktive Aufwand erheblich erhöht wird.

Vorzugsweise ist das Trägerelement 30 wärmeleitend mit dem Boden 32 des Gehäuses 14 verbunden. Dies wird beispielsweise mittels einer Klebverbindung realisiert. Eine weitere Möglichkeit besteht in der Zuordnung von wärmedämmendem Material zum Gehäuse 14. Dabei kann das Gehäuse 14 insbesondere im Bereich seiner zum Ölsumpf 11 hinweisenden Aussenseiten, hier der Seitenflächen 33.1 bis 33.3 mit einem wärmedämmenden Material beschichtet werden. Eine andere Möglichkeit besteht darin, die Gehäusewandung aus wärmedämmendem Material zu gestalten.

Die Figur 2b verdeutlicht in schematisch vereinfachter Darstellung anhand des Gehäuses 14 der Steuereinrichtung 3 entsprechend der Figur 2a die Möglichkeit der Zuordnung von Mitteln zur wenigstens indirekten Wärmeabfuhr von den elektrischen Bauelementen der Steuereinrichtung 3. Zu diesem Zweck sind in den Wänden 34 des Gehäuses 14 Kühlmittelführungsleitungen 35.1 bis 35.n vorgesehen. Diese können, wie in der Figur 2b schematisch vereinfacht dargestellt, im Kühlkreislauf 36 des Fahrzeuges bei Integration des hydrodynamischen Retarders 1 in einem Fahrzeug integriert sein. Der hydrodynamische Retarder ist hier stark vereinfacht zu Verdeutlichungszwecken dargestellt. Die Kühlmittelführungsleitungen 35.1 bis 35.n befinden sich dabei im Zulauf zu einer Kühleinrichtung oder einem Wärmetauscher 37. Dem gegenüber offenbart die Figur 2c eine Ausführung, bei welcher die Kühlmittelführungsleitungen 35.1 bis 35.n in den Wänden 34 des Gehäuses 14 in den Kühlmittelkreislauf 38 des hydrodynamischen Retarders 1 integriert sind. Eine andere, hier im einzelnen nicht dargestellte Möglichkeit besteht darin, der Steuereinrichtung 3 einen separaten Kühlkreislauf zuzuordnen.

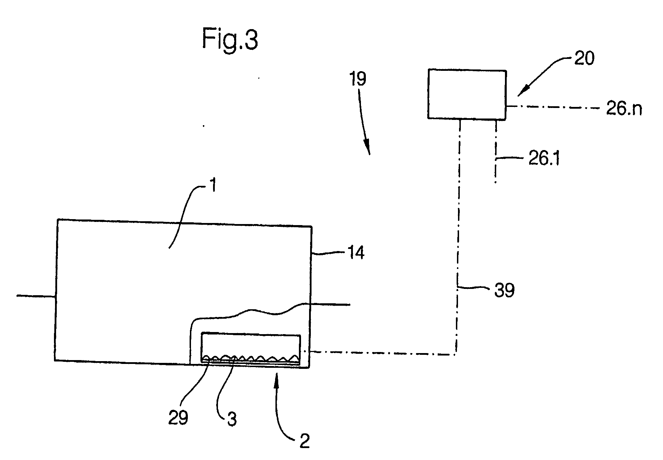

Die Figur 3 verdeutlicht in schematisch vereinfachter Darstellung bei Kopplung der elektrischen Steuervorrichtung 2 des hydrodynamischen Retarders 1 mit der Steuervorrichtung 20 des Fahrzeuges die Ausgestaltung einer Vorrichtung zur elektronischen Steuerung des Retardes 19. In der Figur 3 sind dabei der Retarder 1 sowie die Steuervorrichtung 20 für das Fahrzeugmanagement, welche vorliegend als Elektronische Steuereinheit ausgeführt ist, dargestellt. Diese ist dabei im Fahrzeug entfernt vom Retarder 1 angeordnet.

Der Retarder 1 ist in beliebiger Stelle im Fahrzeug einbaubar und der Begriff umfaßt sämtliche Retarderbaueinheitenarten. Erfindungsgemäß ist im Gehäuse 14 des Retarders 1 die zweite Steuereinrichtung 3 der Steuervorrichtung 2 der Retarderbaueinheit angeordnet. Diese ist vorzugsweise vom Retarder sowohl bezüglich des Wärmeübertrages wie auch der Übertragung von Schwingungen entkoppelt, und zwar beispielsweise wie eingezeichnet durch eine wärmeisolierende Schicht an den Gehäusewänden sowie eine elastische Aufhängung 29 zwischen der Steuereinrichtung 3 und dem Gehäuse 4 des Retarders 1.

Mit der Steuervorrichtung 20, die Programme für das gesamte Fahrzeugmanagement umfassen kann, ist die Steuereinrichtung 3 über wenigstens eine Signalleitung 39 elektrisch verbunden. In einer alternativen Ausführungsform kann die zweite Steuereinrichtung für die Getriebebaueinheit statt direkt mit der Steuervorrichtung 20 zur Realisierung des Fahrzeugmanagements auch mit einer Schnittstelle, beispielsweise einem CAN-Bus für das Fahrzeugmanagement verbunden sein. Über die Verbindungsleitung 39 können die entsprechenden Steuersignale von der Steuervorrichtung 20 beziehungsweise der Schnittstelle an die Steuereinrichtung 3 übermittelt werden, ebenso wie verarbeitete Signale von der Steuereinrichtung 3 zur Steuervorrichtung 20 beziehungsweise der Schnittstelle. An der Steuervorrichtung 20 angedeutet sind weitere Signalleitungen 26.1 bis 26.n zu anderen Fahrzeugkomponenten, beispielsweise zur Antriebsmaschine oder zu anderen Bremssystemen.

Mit der vorliegenden Erfindung wird somit erstmals eine Anordnung geschaffen, mit der auf einfache Art und Weise ein Austausch der Steuereinrichtungen des hydrodynamischen Retarders oder eine Umprogrammierung derselben beim Tausch des hydrodynamischen Retarders oder einzelner Elemente des hydrodynamischen Retarders entfällt.

### Bezugszeichenliste

- 1.: Hydrodynamischer Retarder
- 2.: Steuervorrichtung
- 3.: Steuereinrichtung
- 4.: Gehäuse
- 5.1 bis 5.n: Eingänge der Steuereinrichtung 3
- 6.1 bis 6.n: Ausgänge der Steuereinrichtung 3
- 7.1 bis 7.n: Sensoren
- 8.1 bis 8.n: Aktuatoren
- 9.: Gehäuseinnenwand
- 10.: Seitenwand
- 11.: Ölsumpf
- 12.1 bis 12.n: elektrische Bauelemente
- 13.: Trägerplatte
- 14.: Gehäuse
- 15.1 bis 15.n: Verbindungsleitungen
- 16.1 bis 16.n: Verbindungsleitungen
- 17.: Durchführung
- 18.: Durchführung
- 19.: Vorrichtung zur Steuerung der Getriebebaueinheit
- 20.: Steuervorrichtung
- 21.: Steuereinrichtung
- 22.1 bis 22.n: Eingänge der Steuereinrichtung 21
- 23.1 bis 23. n: Ausgänge der Steuereinrichtung 21
- 24: Isolierkörper
- 25: Isolierkörper
- 26: Verbindungsleitung
- 27: Durchgangsöffnung
- 28: Durchgangsöffnung
- 29: Aufhängung
- 30.: Trägerelement
- 31.1 bis 31.n: Elektrische Kontakte
- 32.: Boden des Gehäuses 14
- 33.1 bis 33. n: Gehäuseseiten
- 34.: Wand
- 35.1 bis 35. n: Kühlmittelführungsleitung
- 36.: Kühlkreislauf des Fahrzeuges
- 37.: Kühler beziehungsweise Wärmetauscher
- 38.: Kühlmittelkreislauf des Getriebes
- 39.: Vorrichtung zur Steuerung der Getriebebaueinheit
- 40.: Verbindungsleitung

## Patentansprüche

1. Hydrodynamischer Retarder (1)
1.1 mit einem Retardergehäuse (4);
1.2 mit einer Steuervorrichtung (2), umfassend wenigstens eine Steuereinrichtung (3) in Form eines Steuergerätes;
**gekennzeichnet durch** das folgende Merkmal:
1.3 die Steuereinrichtung (3) ist im Retardergehäuse (4) angeordnet.

2. Hydrodynamischer Retarder nach Anspruch 1, **gekennzeichnet durch** die folgenden Merkmale:
2.1 die Steuereinrichtung (3) umfaßt eine Mehrzahl elektrischer Bauelemente (12), welche auf wenigstens einem Trägerelement (30) angeordnet sind;
2.2 die Steuereinrichtung (3) umfaßt ein Gehäuse (14).

3. Hydrodynamischer Retarder nach Anspruch 2, **gekennzeichnet durch** die folgenden Merkmale:
3.1 das Gehäuse (14) der Steuereinrichtung (3) ist flüssigkeitsbeziehungsweise öldicht ausgeführt;
3.2 die Steuereinrichtung (3) ist im Ölsumpf (11) des hydrodynamischen Retarders angeordnet.

4. Hydrodynamischer Retarder nach einem der Ansprüche 2 oder 3, **dadurch gekennzeichnet, daß** Mittel zur wärmetechnischen Entkopplung der elektrischen Bauelemente (12) der Steuereinrichtung (3) von dem hydrodynamischen Retarder (1) und/oder dem Ölsumpf (11) vorgesehen sind.

5. Hydrodynamischer Retarder nach Anspruch 4, **dadurch gekennzeichnet, daß** die Mittel wenigstens eine Beschichtung für das Gehäuse der Steuereinrichtung (3) aus wärmedämmenden Material umfassen.

6. Hydrodynamischer Retarder nach einem der Ansprüche 1 bis 5, **dadurch gekennzeichnet, daß** Mittel zur wenigstens indirekten Kühlung der elektrischen Bauelemente (12) der Steuereinrichtung (3) vorgesehen sind.

7. Hydrodynamischer Retarder nach Anspruch 6, **dadurch gekennzeichnet, daß** die Mittel eine wärmeleitende Verbindung zwischen dem Trägerelement (30) und der Gehäusewand (34) des Gehäuses (14) der Steuereinrichtung (3) aufweisen.

8. Hydrodynamischer Retarder nach Anspruch 7, **dadurch gekennzeichnet, daß** die wärmeleitende Verbindung als Klebverbindung zwischen Trägerelement (30) und Gehäusewand (34) ausgeführt ist.

9. Hydrodynamischer Retarder nach einem der Ansprüche 6 bis 8, **dadurch gekennzeichnet, daß** die Mittel der Steuereinrichtung (3) zugeordnete Kühlkanäle umfassen.

10. Hydrodynamischer Retarder nach Anspruch 9, **dadurch gekennzeichnet, daß** die Kühlkanäle in der Gehäusewand (34) des Gehäuses (14) angeordnet sind.

11. Hydrodynamischer Retarder nach einem der Ansprüche 9 oder 10, **dadurch gekennzeichnet, daß** die Kühlkanäle mit dem Kühlkreislauf (36) des Fahrzeuges verbunden sind.

12. Hydrodynamischer Retarder nach einem der Ansprüche 9 bis 11, **dadurch gekennzeichnet, daß** die Kühlkanäle mit dem Kühlkreislauf (38) des hydrodynamischen Retarders (1) gekoppelt sind.

13. Hydrodynamischer Retarder nach einem der Ansprüche 1 bis 12, **gekennzeichnet durch** die folgenden Merkmale:
13.1 die Steuereinrichtung (3) weist eine Vielzahl von Eingängen (5.1 bis 5.n) und wenigstens einen Ausgang (6.1 bis 6.n) auf;
13.2 die Eingänge (5.1 bis 5.n) der Steuereinrichtung (3) sind wenigstens mittelbar mit Sensoren (7.1 bis 7.n) zur Erfassung einer, einen Fahrerwunsch nach Einstellung eines bestimmten Bremsmomentes und/oder einer, den aktuellen Füllungsgrad des hydrodynamischen Retarders wenigstens mittelbar charakterisierenden Größe und/oder einer übergeordneten Steuervorrichtung (20) gekoppelt;
13.3 die Ausgänge (6.1 bis 6.n) der Steuereinrichtung (3) sind wenigstens mittelbar mit Aktuatoren (8.1 bis 8.n) zur Änderung des Füllungsgrades des hydrodynamischen Retarders koppelbar;
13.4 zur Realisierung der Verbindung zwischen den Sensoren (7.1 bis 7.n) und der Steuereinrichtung (3), den Aktuatoren (8.1 bis 8.n) und der Steuereinrichtung (3) und/oder einer weiteren Steuervorrichtung (20) und der Steuereinrichtung (3) des hydrodynamischen Retarders sind im Gehäuse (14) der Steuereinrichtung (3) mindestens eine oder mehrere Durchführungen (17, 18) vorgesehen.

14. Hydrodynamischer Retarder nach Anspruch 13, **dadurch gekennzeichnet, daß** die elektrische Verbindung zwischen den Sensoren (7.1 bis 7.n) den Aktuatoren (8.1 bis 8.n) und/oder der weiteren Steuervorrichtung (20) und der Steuereinrichtung (3) durch Kopplung der elektrischen Kontakte im Gehäuse (14) der Steuereinrichtung (3) hergestellt wird;
14.1 die Verbindungsleitungen (15.1 bis 15.n), (16.1 bis 16.n) werden durch Durchgangsöffnungen (27, 28) in der Gehäusewand (34) der Steuereinrichtung (3) geführt, wobei zwischen den Verbindungsleitungen und der Gehäusewand (34) jeweils ein Isolierkörper (24, 25) vorgesehen ist.

15. Hydrodynamischer Retarder nach einem der Ansprüche 1 bis 14, **dadurch gekennzeichnet, daß** die Steuereinrichtung (3) des hydrodynamischen Retarders mit einer weiteren Steuervorrichtung (20), welche zur Realisierung des Fahrzeugmanagements eingesetzt wird, koppelbar ist.

16. Hydrodynamischer Retarder nach einem der Ansprüche 1 bis 15, **dadurch gekennzeichnet, daß** die Steuereinrichtung (3) schwingungsgedämpft im Retardergehäuse (4) angeordnet ist.

17. Vorrichtung zur elektronischen Steuerung eines hydrodynamischen Retarders mit
17.1 einer elektronischen Steuereinrichtung (21) für das Fahrzeugmanagement, die
17.2 in einer vorbestimmten Position im Fahrzeug entfernt von dem hydrodynamischen Retarder (1) angeordnet ist, und
17.3 einer weiteren elektronischen Steuervorrichtung, umfassend eine elektronische Steuereinrichtung (3) für den hydrodynamischen Retarder (1), **dadurch gekennzeichnet, daß**
17.4 die elektronische Steuereinrichtung (3) des hydrodynamischen Retarders (1) im Gehäuse (4) des hydrodynamischen Retarders (1) angeordnet ist und
17.5 über zumindest eine Signalleitung (41) elektrisch mit der elektronischen Steuereinrichtung (21) beziehungsweise eine Schnittstelle für das Fahrzeugmanagement verbunden sind.

18. Vorrichtung nach Anspruch 17 für einen hydrodynamischen Retarder nach einem der Ansprüche 1 bis 16.

## Claims

1. Hydrodynamic retarder (1)
1.1 with a retarder housing (4);
1.2 with a controller (2) comprising at least one control device (3) in the form of a control apparatus;
**characterised by** the following feature:
1.3 the control device (3) is arranged in the retarder housing (4).

2. Hydrodynamic retarder according to claim 1, **characterised by** the following features:
2.1 the control device (3) comprises a plurality of electric components (12) arranged on at least one carrier element (30);
2.2 the control device (3) comprises a housing (14).

3. Hydrodynamic retarder according to claim 2, **characterised by** the following features:
3.1 the housing (14) of the control device (3) is designed so as to be liquid- and oil-tight;
3.2 the control device (3) is arranged in the oil sump (11) of the hydrodynamic retarder.

4. Hydrodynamic retarder according to either of claims 2 or 3, **characterised in that** means for thermal isolation of the electric components (12) of the control device (3) from the hydrodynamic retarder (1) and/or the oil sump (11) are provided.

5. Hydrodynamic retarder according to claim 4, **characterised in that** the means comprise at least one coating for the housing of the control device (3) consisting of heat insulating material.

6. Hydrodynamic retarder according to any of claims 1 to 5, **characterised in that** means for at least indirect cooling of the electric components (12) of the control device (3) are provided.

7. Hydrodynamic retarder according to claim 6, **characterised in that** the means comprise a heat conducting connection between the carrying element (30) and the housing wall (34) of the housing (14) of the control device (3).

8. Hydrodynamic retarder according to claim 7, **characterised in that** the heat-conducting connection is designed as a glued joint between carrying element (30) and housing wall (34).

9. Hydrodynamic retarder according to any of claims 6 to 8, **characterised in that** the means of the control device (3) comprise associated cooling ducts.

10. Hydrodynamic retarder according to claim 9, **characterised in that** the cooling ducts are arranged in the housing wall (34) of the housing (14).

11. Hydrodynamic retarder according to either of claims 9 or 10, **characterised in that** the cooling ducts are connected to the cooling circuit (36) of the vehicle.

12. Hydrodynamic retarder according to any of claims 9 to 11, **characterised in that** the cooling ducts are coupled to the cooling circuit (38) of the hydrodynamic retarder (1) .

13. Hydrodynamic retarder according to any of claims 1 to 12, **characterised by** the following features:
13.1 the control device (3) comprises a large number of inputs (5.1 to 5.n) and at least one output (6.1 to 6.n);
13.2 the inputs (5.1 to 5.n) of the control device (3) are coupled at least indirectly to sensors (7.1 to 7.n) to detect a variable at least indirectly characterising a driver's wish after adjustment of a specific braking moment and/or a variable at least indirectly characterising the current filling level of the hydrodynamic retarder, and/or to a superordinate controller (20);
13.3 the outputs (6.1 to 6.n) of the control device (3) can be coupled at least indirectly to actuators (8.1 to 8.n) to change the filling level of the hydrodynamic retarder;
13.4 at least one or more passages (17, 18) are provided in the housing (14) of the control device (3) to achieve the connection between the sensors (7.1 to 7.n) and the control device (3), the actuators (8.1 to 8.n) and the control device (3) and/or a further controller (20) and the control device (3) of the hydrodynamic retarder.

14. hydrodynamic retarder according to claim 13, **characterised in that** the electrical connection between the sensors (7.1 to 7.n), the actuators (8.1 to 8.n) arid/or the further controller (20) and the control device (3) is produced by coupling of the electrical contacts in the housing (14) of the control device (3);
14.1 the connecting lines (15.1 to 15.n), (16.1 to 16.n) are guided through through-apertures (27, 28) in the housing wall (34) of the control device (3), a respective insulating body (24, 25) being provided between the connecting lines and the housing wall (34).

15. hydrodynamic retarder according to any of claims 1 to 14, **characterised in that** the control device (3) of the hydrodynamic retarder can be coupled to a further controller (20) which is used to achieve vehicle management.

16. Hydrodynamic retarder according to any of claims 1 to 15, **characterised in that** the control device (3) is arranged, with vibration-damping, in the retarder housing (4).

17. Device for electronically controlling a hydrodynamic retarder with
17.1 an electronic control device (21) for vehicle management, which
17.2 is arranged in a predetermined position in the vehicle remote from the hydrodynamic retarder (1), and
17.3 a further electronic controller, comprising an electronic control device (3) for the hydrodynamic retarder (1), **characterised in that**
17.4 the electronic control device (3) of the hydrodynamic retarder (1) is arranged in the housing (4) of the hydrodynamic retarder (1) and
17.5 are connected electrically via at least one signal line (41) to the electronic control device (21) or an interface for vehicle management.

18. Device according to claim 17 for a hydrodynamic retarder according to any of claims 1 to 16.

## Revendications

1. Ralentisseur hydrodynamique (1)
1.1 avec un carter de ralentisseur (4) ;
1.2 avec un dispositif de commande (2), comprenant au moins un appareil de commande (3) sous forme d'un organe de commande ;
**caractérisé par** la disposition suivante :
1.3 l'appareil de commande (3) est agencé dans le carter de ralentisseur (4).

2. Ralentisseur hydrodynamique selon la revendication 1, **caractérisé par** les dispositions suivantes :
2.1 l'appareil de commande (3) comprend une pluralité d'éléments électriques (12) qui sont agencés sur au moins un élément de support (30);
2.2 l'appareil de commande (3) comprend un carter (14).

3. Ralentisseur hydrodynamique selon la revendication 2, **caractérisé par** les dispositions suivantes :
3.1 le carter (14) de l'appareil de commande (3) est réalisé de manière à être étanche aux liquides, notamment à l'huile ;
3.2 l'appareil de commande (3) est agencé dans le réservoir d'huile (11) du ralentisseur hydrodynamique.

4. Ralentisseur hydrodynamique selon l'une des revendications 2 et 3, **caractérisé en ce qu'**il est prévu des moyens de découplage thermique des éléments électriques (12) de l'appareil de commande (3) par rapport au ralentisseur hydrodynamique (1) et/ou au réservoir d'huile (11).

5. Ralentisseur hydrodynamique selon la revendication 4, **caractérisé en ce que** les moyens comprennent au moins une couche mince de revêtement pour le carter de l'appareil de commande (3), réalisée dans un matériau isolant thermique.

6. Ralentisseur hydrodynamique selon l'une des revendications 1 à 5, **caractérisé en ce qu'**il est prévu des moyens destinés au refroidissement au moins indirect des éléments électriques (12) de l'appareil de commande (3).

7. Ralentisseur hydrodynamique selon la revendication 6, **caractérisé en ce que** les moyens présentent une liaison conductrice de chaleur entre l'élément de support (30) et la paroi (34) du carter (14) de l'appareil de commande (3).

8. Ralentisseur hydrodynamique selon la revendication 7, **caractérisé en ce que** la liaison conductrice de chaleur est réalisée sous forme de liaison par collage entre l'élément de support (30) et la paroi du carter (34).

9. Ralentisseur hydrodynamique selon l'une des revendications 6 à 8, **caractérisé en ce que** les moyens de l'appareil de commande (3) comprennent des canaux de refroidissement affectés.

10. Ralentisseur hydrodynamique selon la revendication 9, **caractérisé en ce que** les canaux de refroidissement sont agencés dans la paroi (34) du carter (14).

11. Ralentisseur hydrodynamique selon l'une des revendications 9 et 10, **caractérisé en ce que** les canaux de refroidissement sont reliés au circuit de refroidissement (36) du véhicule.

12. Ralentisseur hydrodynamique selon l'une des revendications 9 à 11, **caractérisé en ce que** les canaux de refroidissement sont couplés avec le circuit de refroidissement (38) du ralentisseur hydrodynamique (1).

13. Ralentisseur hydrodynamique selon l'une des revendications 1 à 12, **caractérisé par** les dispositions suivantes :
13.1 l'appareil de commande (3) présente une pluralité d'entrées (5.1 à 5.n) et au moins une sortie (6.1 à 6.n) ;
13.2 les entrées (5.1 à 5.n) de l'appareil de commande (3) sont au moins indirectement couplées avec des capteurs (7.1 à 7.n) destinés à saisir une grandeur caractérisant au moins indirectement un souhait du conducteur en matière de réglage d'un couple de freinage déterminé et/ou d'une grandeur caractérisant au moins indirectement le degré actuel de remplissage du ralentisseur hydrodynamique et/ou avec un appareil de commande (20) hiérarchiquement supérieur ;
13.3. les sorties (6.1 à 6.n) de l'appareil de commande (3) peuvent être couplées au moins indirectement à des activateurs (8.1 à 8.n) destinés à modifier le degré de remplissage du ralentisseur hydrodynamique ;
13.4 pour réaliser la liaison entre les capteurs (7.1 à 7.n) et l'appareil de commande (3), les activateurs (8.1 à 8.n) et l'appareil de commande (3) et/ou un appareil de commande supplémentaire (20) et l'appareil de commande (3) du ralentisseur hydrodynamique, il est prévu dans le carter (14) de l'appareil de commande (3) au moins un ou plusieurs passages (17,18).

14. Ralentisseur hydrodynamique selon la revendication 13, **caractérisé en ce que** la liaison électrique entre les capteurs (7.1 à 7.n), les activateurs (8.1 à 8.n) et/ou l'appareil de commande supplémentaire (20) et l'appareil de commande (3), est réalisée par couplage des contacts électriques dans le carter (14) de l'appareil de commande (3).
14.1 Les conduites de connexion (15.1 à 15.n), (16.1 à 16.n) sont passées à travers des orifices de passage (27, 28) dans la paroi de carter (34) de l'appareil de commande (3), un corps isolant (24, 25) étant à chaque fois prévu entre les conduites de connexion et la paroi de carter (34).

15. Ralentisseur hydrodynamique selon l'une des revendications 1 à 14, **caractérisé en ce que** l'appareil de commande (3) du ralentisseur hydrodynamique peut être couplé avec un appareil de commande additionnel (20), qui est implanté pour assurer la gestion du véhicule.

16. Ralentisseur hydrodynamique selon l'une des revendications 1 à 15, **caractérisé en ce que** l'appareil de commande (3) est monté dans le carter de ralentisseur (4) avec amortissement des oscillations.

17. Dispositif de commande électronique d'un ralentisseur hydrodynamique avec
17.1 un appareil de commande électronique (21) pour la gestion du véhicule qui
17.2 est placé dans une position prédéterminée dans le véhicule à distance du ralentisseur hydrodynamique (1), et
17.3 un dispositif de commande électronique supplémentaire comprenant un appareil de commande électronique (3) pour le ralentisseur hydrodynamique (1), **caractérisé en ce que**
17.4 l'appareil de commande électronique (3) du ralentisseur hydrodynamique (1) est agencé dans le carter (4) du ralentisseur hydrodynamique (1) et
17.5 est électriquement relié à l'appareil de commande électronique (21) par l'intermédiaire d'au moins une canalisation de signal (41) ou d'une interface pour la gestion du véhicule.

18. Dispositif selon la revendication 17 pour un ralentisseur hydrodynamique selon l'une des revendications 1 à 16.
